**Europäisches Patentamt**

**European Patent Office**

**Office européen des brevets**

(19)

(11) Veröffentlichungsnummer : **0 051 649**
**B1**

(12) **EUROPÄISCHE PATENTSCHRIFT**

(45) Veröffentlichungstag der Patentschrift :
25.07.84

(21) Anmeldenummer : 81901309.5

(22) Anmeldetag : 07.05.81

(86) Internationale Anmeldenummer :
PCT/DE 81/00069

(87) Internationale Veröffentlichungsnummer :
WO/8103230 (12.11.81 Gazette 81/27)

(51) Int. Cl.³ : **G 03 B 35/10**

(54) STEREOKAMERA.

(30) Priorität : 08.05.80 DE 3017820

(43) Veröffentlichungstag der Anmeldung :
19.05.82 Patentblatt 82/20

(45) Bekanntmachung des Hinweises auf die Patenterteilung : 25.07.84 Patentblatt 84/30

(84) Benannte Vertragsstaaten :
AT CH FR GB LI NL SE

(56) Entgegenhaltungen :
CH-A-   300 657
DE-A- 2 501 620
FR-A-   810 592
FR-A-   887 942
FR-A-   924 804
GB-A-   636 182
US-A- 2 240 728
US-A- 3 019 698
US-A- 3 825 328

(73) Patentinhaber : Schulte, Gerd
Martin-Luther-Strasse 32-38
D-1000 Berlin 28 (DE)

(72) Erfinder : Schulte, Gerd
Martin-Luther-Strasse 32-38
D-1000 Berlin 28 (DE)

(74) Vertreter : Strohschänk, Heinz, Dipl.-Ing.
Musäusstrasse 5
D-8000 München 60 (DE)

**Beschreibung**

Die Erfindung betrifft eine Stereokamera mit zwei Objektiven und nachgeordneten Spiegeln oder Prismen, welche übereinander angeordnete Breitformat-Halbbilder erzeugen.

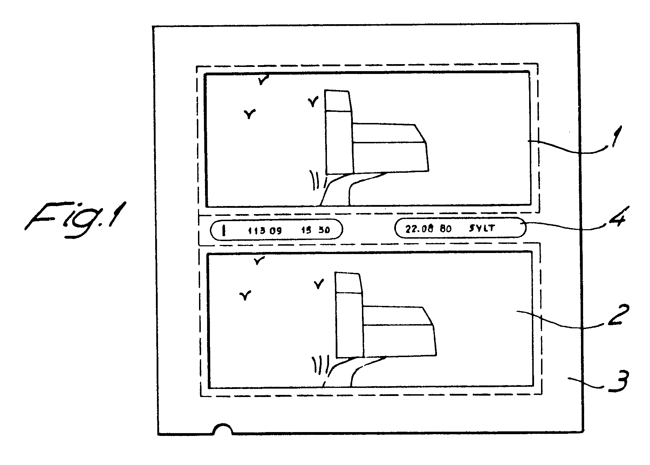

Derartige Stereokameras sind bekannt. Beispielsweise zeigt die Fig. 1 eine derartige Anordnung für gleichsinnig ausgerichtete Halbbilder.

Weiter sind auch schon verschiedentlich Methoden zur Konvergenzeinstellung und zur Veränderung der Basis angegeben worden. So finden sich einige komplizierte Lösungen vor allem in der Kinotechnik, vgl. z. B. O. Vierling : Die Stereoskopie in der Photographie und Kinematographie, Wissenschaftliche Verlagsgesellschaft mbH, Stuttgart 1965, S. 189-199. Hier wird durch verschwenkbare Basisprismen, durch Drehen der übereinander angeordneten und gemeinsam gefaßten Objektive, sowie durch eine vorgeschaltete Drehkeilvorrichtung eine Basisveränderung und eine zum Teil kontinuierliche Konvergenzänderung ermöglicht. Die Nachteile sind aber insbesondere der sehr kleine Bildwinkel und mögliche Höhenfehler. Dabei ist die gleichsinnige Halbbildanordnung optisch generell aufwendiger als die gegenläufig gedrehte Variante, vermeidet dafür aber weitgehend bildstandbedingte Deckungsfehler. Ein Wechsel der Brennweite oder Basis ist hier, wenn überhaupt, meist nur durch einen umständlichen Austausch der gesamten Objektiv-gruppe oder durch Vorsatzadapter möglich.

Der Erfindung liegt die Aufgabe zugrunde, eine bessere Lösung für eine vielseitiger und dabei einfacher zu handhabende Stereokamera aufzuzeigen, die einen raschen Wechsel von Brennweite und Basis erlaubt.

Erfindungsgemäß wird diese Aufgabe durch die im Anspruch 1 gekennzeichneten Mittel gelöst.

Ausführungsbeispiele der Erfindung und der weiteren Ausgestaltung sind in der Zeichnung dargestellt ; es zeigen :

Figur 1 ein schematisches Beispiel einer Stereoaufnahme mit gleichsinnig übereinander angeordneten Halbbildern ;

Figuren 2 und 3 Ausführungsbeispiel einer Stereokamera gemäß der Erfindung mit gleichsinniger Halbbildanordnung, bei vereinfachter perspektivischer Darstellung des Strahlengangs.

Bei dem Ausführungsbeispiel einer Stereoaufnahme in Fig. 1 ist das linke Teilbid 1 oben und das rechte Teilbild 2 unten angeordnet. Der relativ breite Datentrennstreifen 4 sorgt nicht nur für eine gute Entkopplung der beiden Halbbildstrahlengänge, sondern bietet auch die Möglichkeit, z. B. Datum, Uhrzeit, Bildnummer, Filmnummer, Kameranummer, Ortsbezeichnungen und kodierte Kennzeichen für die Filmbearbeitung automatisch mit aufzuzeichnen, ohne den Bildinhalt zu beeinträchtigen. Die Daten oder Teile davon können nach Wunsch mitprojiziert oder ausgeblendet werden. Ebenso ermöglicht der Datentrennstreifen die Herstellung von stabilen glaslosen Diarahmen 3 mit Mittelsteg gemäß Fig. 1.

Gemäß der Erfindung wird die Stereokamera durch zusätzliche, fest eingebaute Objektive 14 längerer Brennweite ergänzt. Diese, bzw. deren erste Linsengruppe sind jeweils in der Verlängerung der durch den Strahlenleiter verlaufenden Achse nach außen hin angeordnet. Dort wird der Strahlenverlauf wiederum durch Prismen oder Spiegel 15 um 90° in Objektrichtung umgelenkt. Je nach Baulänge und Brennweite kann sich die erste Linsengruppe vor oder hinter dem Prisma oder Spiegel 15 befinden.

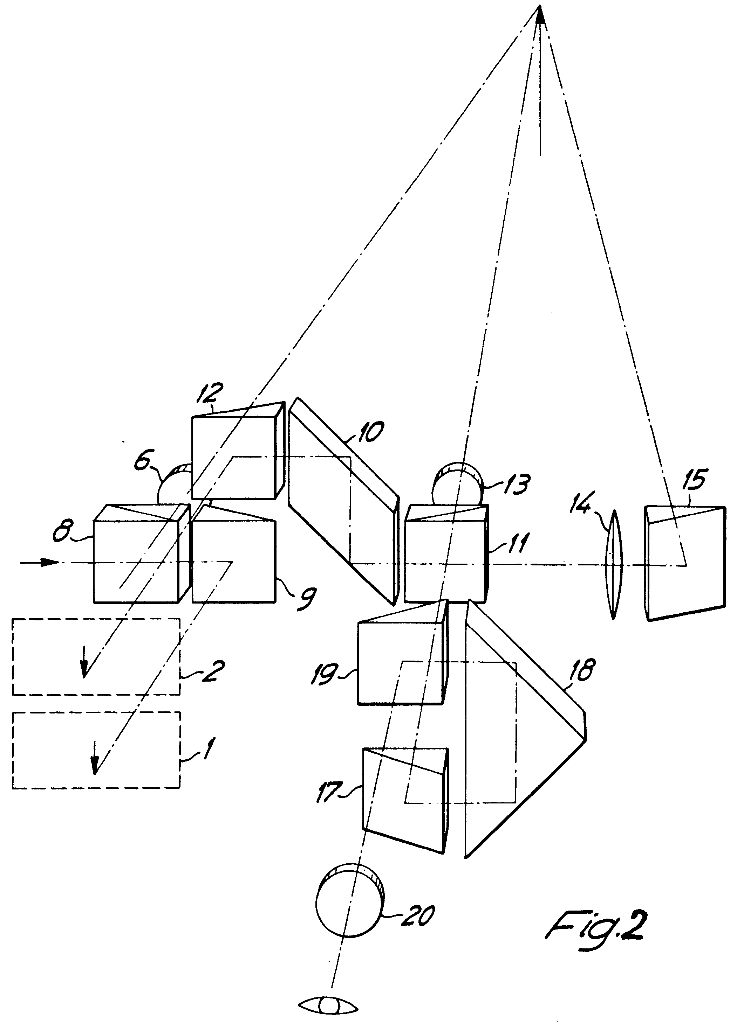

Damit nun die beiden Halbbilder nicht auf gleicher Höhe ineinander geschrieben werden, ist für mindestens einen der beiden Strahlengänge eine höhenversetzende Anordnung, z. B. ein rhombisches Prisma 10 zwischen dem ersten und zweiten Prisma (oder Spiegel) 8 und 9, bzw. 11 und 12 notwendig (Fig. 2). Hierdurch wird wieder der richtige Abstand zwischen beiden Halbbildern hergestellt.

Bei größeren Bildformaten können sich aufgrund der vorgegebenen Objektiv- und Halbbildabstände, sowie der hier erforderlichen längeren Brennweiten unerwünschte Einschränkungen ergeben.

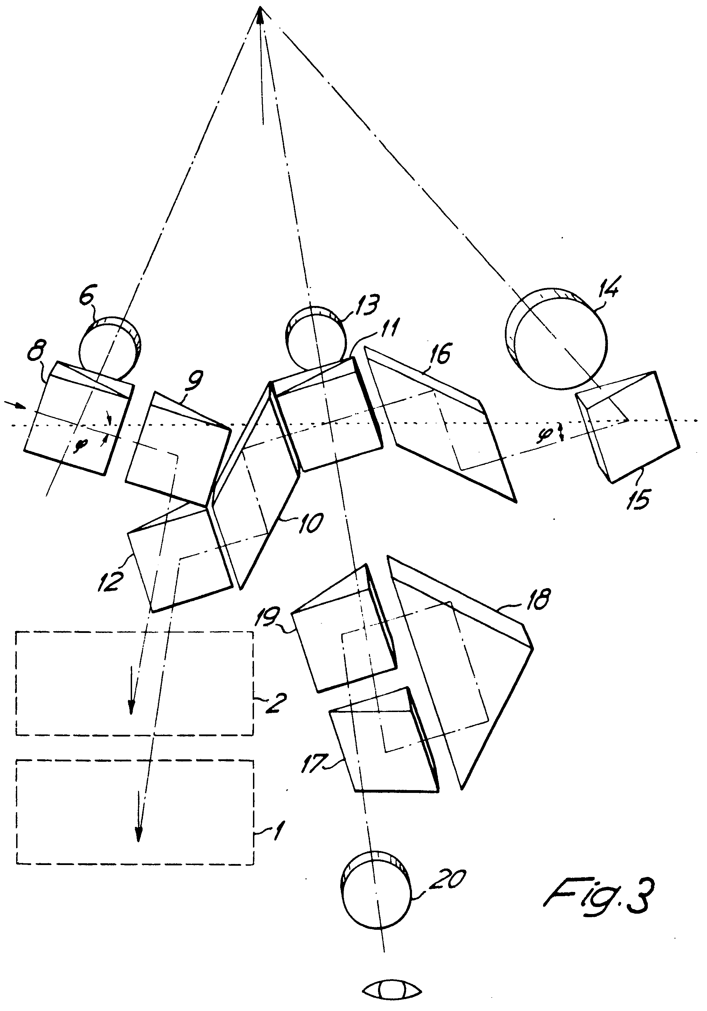

Dem kann aber durch eine Abänderung der Anordnung in Fig. 2 begegnet werden. Nach Fig. 3 wird hierzu vorgeschlagen, die beiden Prismen- oder Spiegelsysteme 8, 9 und 11, 10, 12 gegenläufig, im gleichen Winkel φ und die jeweilige durch das Objektiv gehende Hauptachse — vorzugsweise nach unten — zu drehen. Hiermit erhält der bisher nur horizontale Versatz durch die Prismen 8 und 9, sowie 11 und 12 zur Mitte hin nun auch eine vertikale Komponente. Diese ist aber nicht störend, da sie für beide Halbbilder gleichgerichtet auftritt. Die horizontale Komponente wird einfach über cos φ errechnet. Es lassen sich nun aber Basis, Brennweite und Bildabstände weitgehend frei wählen.

Um alle Möglichkeiten zu einer schnellen (elektrischen) Brennweitenumschaltung nutzen zu können, ist es sehr sinnvoll, außer einem gemeinsamen Schlitzverschluß jedem Objektiv noch getrennte Verschlüsse oder den Strahlengang unterbrechende Schwenkspiegel zuzuordnen. Zweckmäßigerweise kann auch die Brennweitenumschaltung und der Auslösevorgang in einem kombinierten Doppeldruckpunktauslöser vereinigt sein.

Sehr wichtig für die Beurteilung des Stereobildes und zur Kontrolle der Tiefendarstellung, besonders bei den längeren Brennweiten unumgänglich ist ein Prismensucher. Dieser weist jeweils drei Prismen auf (Fig. 2 und 3). Deren erstes 17 liegt in der Verlängerung der durch die Objektive 6 bzw. 13 und die strahlenteilenden Prismen oder Spiegel gehenden Hauptachsen. Dieses wird für eine korrekte Sucherdarstellung gegebenenfalls gleichsinnig relativ zum dritten Sucherprisma 19 mit dem Strahlenteilerprisma oder Spiegel 8 bzw. 11 mitbewegt. Das Prisma 17 lenkt den Strahlengang nach außen um, wo er durch die Hypotenusenfläche des zweiten Prismas 18 geht, dort nach oben und wieder einwärts reflektiert wird auf ein drittes Prisma 19. Dieses ist zur Augenabstandsanpassung horizontal verschiebbar und führt dem rechten bzw. linken Auge über die Sucherlupe 20 schließlich jeweils ein virtuelles Bild zu. Die notwendige Relativbewegung des ersten Sucherprismas 17 zum dritten 19 kann auch zweckmäßig dadurch erreicht werden, daß die Prismen 17 und 12 sowie 19 und 11 gekoppelt bewegt werden.

Der voll kompensierte Stereoprismensucher ist sehr gut zur Entfernungseinstellung und zur Kontrolle der Tiefendarstellung geeignet und kann zur besseren Beurteilung in z. B. drei Ebenen eingespiegelte Markierungen und Begrenzungsrahmen oder Fadenkreuze und Gitterkreuze aufweisen. Eine Suchermattscheibe kann aber ausdrücklich entfallen.

Besonders vorteilhaft ist weiterhin die Innenmessung durch an den Spiegeln oder Prismen angebrachte Fotozellen, die eine automatische Belichtungszeitsteuerung ermöglichen.

Wichtig bei einer Stereokamera ist auch eine Verkantungsanzeige. Zu diesem Zweck können lageabhängige (Quecksilber-) Schaltkontakte vorgesehen sein, die über zwei Leuchtdioden im Sucher eine entsprechende Anzeige bewirken.

## Ansprüche

1. Stereokamera mit zwei Objektiven und nachgeordneten Spiegeln oder Prismen, welche übereinander angeordnete Breitformat-Halbbilder erzeugen, dadurch gekennzeichnet, daß die jeweils erste Spiegelfläche (8, 11) halbdurchlässig oder aus dem Strahlengang verschwenkbar ist, und daß sich in seitlicher Verlängerung des umgelenkten Hauptstrahls nach außen jeweils eine weitere umlenkende Spiegelfläche (15) und ein vor- bzw. nachgeordnetes Objektive (14) längerer Brennweite mit eigenem Verschluß befinden.

2. Stereokamera nach Anspruch 1, dadurch gekennzeichnet, daß rhombische Spiegelflächen (Prisma 10 bzw. 16) zur Höhenanpassung aller Objektive (6, 13, 14) in eine Ebene vorgesehen werden.

3. Stereokamera nach Anspruch 1, bei der die jeweils erste Spiegelfläche halbdurchlässig ausgebildet ist, dadurch gekennzeichnet, daß in Verlängerung des ungespiegelten Hauptstrahls hinter der ersten Spiegelfläche (8, 11) jeweils ein Prismensucher (17 bis 20) angeordnet wird.

4. Stereo-Prismensucher nach Anspruch 3, dadurch gekennzeichnet, daß stereoskopisch sichtbare Begrenzungsrahmen, Gitterkreuze oder sonstige Markierungen in verschiedenen Ebenen eingespiegelt werden.

## Claims

1. A stereoscopic camera comprising two lenses and rearwardly arranged reflectors or prisms producing superposed broad-size half-images, characterized in that the respective first reflector surface (8, 11) is semitransparent or capable of being swung out of the path of rays, respectively, and that in lateral extension of the deviated main ray in outward direction there are disposed a further deviating reflector surface (15) and a forwardly or rearwardly arranged lens (14) of greater focal length having a separate shutter.

2. A stereoscopic camera as claimed in claim 1, characterized in that rhombic reflector surfaces (prism 10 or 16, respectively) for adjustment of all lenses (6, 13, 14) in one plane are provided.

3. A stereoscopic camera as claimed in claim 1, wherein the respective first reflector surface is semi-transparent, characterized in that behind the first reflector surface (8, 11) in the extension of the unreflected main ray there is arranged a prismatic viewfinder (17 to 20) each.

4. A stereoscopic prism viewfinder as claimed in claim 3, characterized in that stereoscopically visible localizing frames, lattice squares or like markings are imaged in various planes.

## Revendications

1. Appareil de prises de vues stéréoscopiques à deux objectifs et miroirs ou prismes associés, qui produisent des demi-images en format large superposées, caractérisé en ce que la première surface réfléchissante (8, 11) associée à chaque objectif est semi-transparente ou peut pivoter hors du trajet des rayons, et que dans le prolongement latéral du rayon principal dévié vers l'extérieur se trouvent une autre surface réfléchissante (15) de déviation et un objectif (14) de focale plus longue, disposé en amont ou en aval et muni de son propre obturateur.

2. Appareil de prises de vues stéréoscopiques selon la revendication 1, caractérisé en ce que des surfaces réfléchissantes rhombiques (prisme 10 ou 16) sont prévues pour l'adaptation en hauteur de tous les objectifs (6, 13, 14) dans un plan.

3. Appareil de prises de vues stéréoscopiques selon la revendication 1, dans lequel la première surface réfléchissante est semi-transparente, caractérisé en ce que, dans le prolongement du rayon principal non réfléchi, un viseur à prismes (17 à 20) est disposé derrière la première surface réfléchissante (8, 11) respectif.

4. Viseur à prismes stéréoscopiques selon la revendication 3, caractérisé en ce que des cadres de délimitation, des croix en réseaux ou d'autres repères visibles en stéréoscopie sont inscrits dans différents plans.

Fig.1

Fig.2

**0 051 649**

Fig.3

3